# EUROPEAN PATENT SPECIFICATION

(11) **EP 1 184 716 B1**
(45) Date of publication and mention of the grant of the patent: **15.02.2006**
(21) Application number: 01120956.6
(22) Date of filing: 31.08.2001
(51) Int. Cl.: G03B 17/52

(54) **A storage medium conveying apparatus**
Transportgerät für eine Speichereinheit
Appareil de transport pour un moyen de stockage

(30) Priority: 31.08.2000 JP 2000264019
(43) Date of publication of application: 06.03.2002
(73) Proprietor: CITIZEN WATCH CO. LTD., Tokyo 188-8511 (JP)
(72) Inventor: Futakami,Shigeru, c/o Citizen Watch Co.Ltd., Nishitokyo-shi, Tokyo 188-8511 (JP); Aizawa,Chikara, c/o Citizen Watch Co.Ltd., Nishitokyo-shi, Tokyo 188-8511 (JP)
(74) Representative: Patentanwälte Ruff, Wilhelm, Beier, Dauster & Partner

(56) References cited:
- US-A- 3 744 388
- US-A- 3 967 304
- US-A- 5 794 077

## Description

### Background of the invention

The invention relates to a conveying apparatus for conveying a storage medium according to the preamble of claim 1.

Recently, in instant film has been widely utilized in various fields. In general, the instant film has a developing solution pack including a self-developing solution at an end of the instant film. After exposing a photosensitive surface of the film in a dark place, the developing solution pack at the end is squeezed so as to extrude the self-developing solution over the entire photosensitive surface so that it is possible to execute the development. Further, in general, a plurality of instant films is contained in a film cartridge. Accordingly, it is necessary to convey the instant film taken out from the film cartridge and to develop the film.

Patent publication US 3,967,304 discloses a storage medium conveying apparatus of the type mentioned at the beginning within a modular subassembly for use in a self-developing camera of the type having an operating cycle during which a film unit is exposed at an exposure position and is then advanced between a pair of pressure applying rollers for distributing a fluid processing composition within the film unit. The apparatus comprises film advance means movable relative to a base section for engaging a film unit at the exposure position and advancing the film unit to the pressure applying rollers, sequencing means for controlling the sequence of certain events in a cycle of camera operation including moving and positioning the film advance means, where the sequencing means include a rotatable sequencing gear configured to rotate through a single 360° revolution, a motor including a drive shaft having a drive gear thereon for rotating the sequencing gear and at least one of the pair of camera rollers having a drive gear thereon to cause a film unit to be advanced between the rollers, and a gear train including a plurality of gears adapted for interconnection to couple said motor drive gear in a driving relation to the sequencing gear and the roller driver gear. The sequencing gear includes a profile cam for selectively engaging and advancing the film advance means in the direction from the exposure position to the rollers, as well as a spring providing a biasing force on the film advance means to move them back in the direction opposite the film advancement.

Patent publication US 3,744,388 also discloses a storage medium conveying apparatus of the type mentioned at the beginning, within a photographic camera, where this apparatus comprises an uni-directional operated motor and energy storage means operately connected to the motor for receiving and storing energy therefrom. A photosensitive material is advanced from a cassette structure to a processing station including processing rollers via rotation of a cam wheel through the motor. The film advance device is moved back from the processing position to the cassette structure position by spring means biased by the forward motion driven through the motor.

It is the technical problem underlying the invention to provide a storage medium conveying apparatus for taking the storage medium out from the container and conveying the storage medium using a simple, cheap and stably operating structure.

The invention solves this problem by providing a storage medium conveying apparatus having the features of claim 1. Advantageous embodiments of the invention are given in the subclaims and also shown in the drawings and described in further detail below.

### BRIEF DESCRIPTION OF THE DRAWINGS

Figure 1 is an outer view of an instant film;
Figure 2 is an outer view of a film cartridge;
Figure 3 is a central cross-sectional view of a storage medium conveying apparatus according to the present invention;
Figure 4A is an explanatory view of encoder pulses;
Figure 4B is a timing chart of data transfer;
Figure 4C is an explanatory view of LED emission pulses;
Figures 4D to 4F are explanatory views of LCS pulses;
Figures 5A to 5F are explanatory views of forming processes for a latent image;
Figure 6 is a perspective view of the storage medium conveying apparatus according to the present invention;
Figure 7 is a plan view of the storage medium conveying apparatus according to the present invention;
Figure 8 is a perspective view of a taking-out member according to the present invention;
Figures 9A to 9D are views for explaining one example of the operation of the taking-out member according to the present invention;
Figures 10A to 10D are views for explaining another example of the operation of the taking-out member according to the present invention;
Figure 11 is a view for explaining one example of a relationship between the taking-out member and the film cartridge; and
Figure 12 is a view for explaining another example of a relationship between the taking-out member and the film cartridge.

### DESCRIPTION OF THE PREFERRED EMBODIMENTS

Before explaining the preferred embodiments, the basic structures of an instant film and a film cartridge will be explained in detail below.

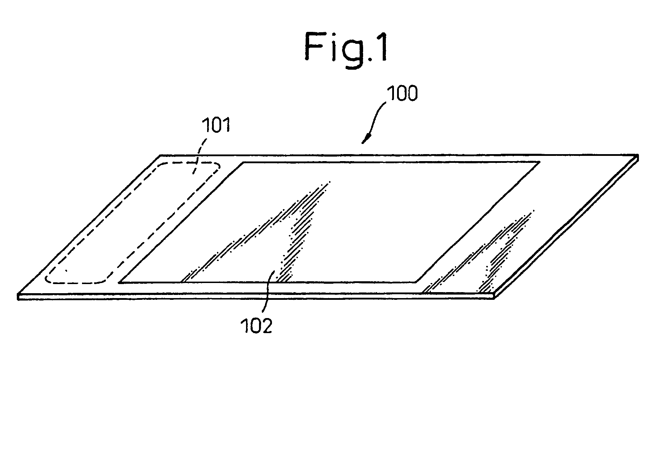

Figure 1 is the outer view of the instant film 100. The instant film 100 has the developing solution pack 101 including self-developing solution at an end of the instant film 100. After exposing the photosensitive surface 102 in a dark place, the developing solution pack 101 provided at the end of the instant film 100 is squeezed so as to extrude the self-developing solution over the entire photosensitive surface 102 so that it is possible to execute the development.

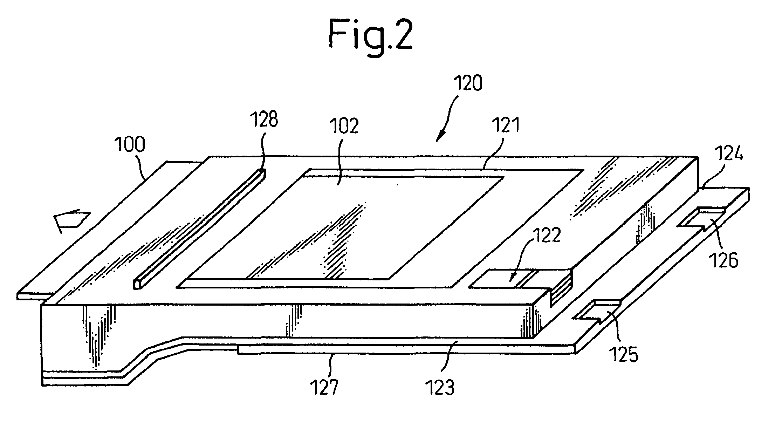

Figure 2 is the outer view of the film cartridge. A plurality of instant films 100 is contained in the film cartridge 120. Accordingly, it is necessary to convey the instant film 100 in order to take the instant film 100 out from the film cartridge 120, and to develop the instant film 100.

In this case, the film cartridge 120 has a large opening portion 121 and a small opening portion 122. Accordingly, it is possible to make contact with the end portion of the instant film 100 contained in the film cartridge 120 at the small opening portion 122. Further, the film cartridge 120 has edge portions 123 and 124 at both sides of the film cartridge 120, and has a battery 127 at a bottom portion of the film cartridge 120. The power is supplied from the battery 127 through electrodes 125 and 126.

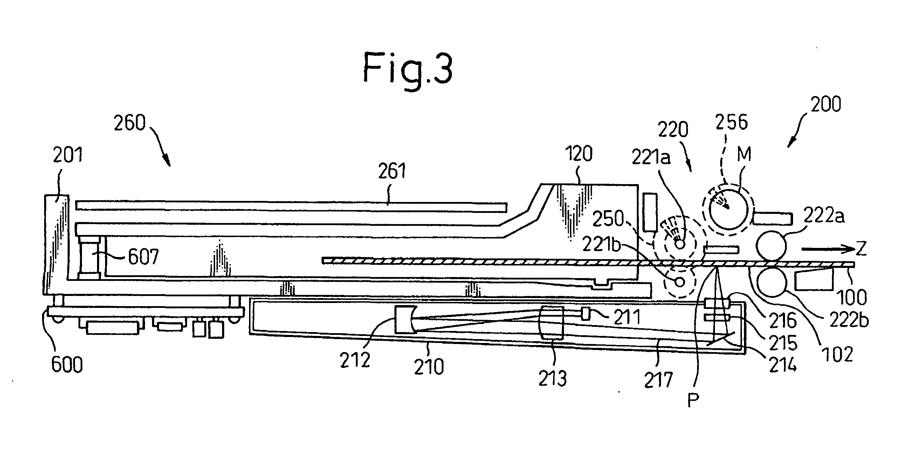

Figure 3 is a central cross-sectional view of the storage medium conveying apparatus 200 according to the present invention. The above explained instant film 100 and the film cartridge 120 are used in the storage medium conveying apparatus 200 according to the present invention. Further, the storage medium conveying apparatus 200 according to the present invention is structured by three main portions, i.e. a light unit 210, a conveying unit 220 and a container 260.

The light unit 210 includes an LED unit 211, a parabolic reflector 212, a toroidal lens 213, a reflecting mirror 214, a liquid crystal light shutter array 215 and a masking member 216.

The LED unit 211 is used as a light source for exposing image data on the instant film 100 by using a line-scanning during conveyance of the instant film 100. The LED unit 211 includes three LED elements each having different colors, and these elements are closely arranged in the direction orthogonal to the drawing.

The parabolic reflector 212 is used for changing the direction of a ray 217 emitted from the light source 211 in a fan-like shape to a light flux in a parallel shape. The toroidal lens 213 has a plane surface and a cylindrical surface.

The reflecting mirror 214 is used for reflecting the ray 217 by 90°, in which the parallel light flux again passes through the toroidal lens 213 and is collected at an exposure surface P on the photosensitive surface 102 in a line-like shape. The liquid crystal light shutter array 215 is used for selectively transmitting the ray 217 emitted from the light source 211. The masking member 216 is used for masking the light.

The liquid crystal light shutter array 215 can form a colored latent image having a structure in which each side of one pixel is 162 µm, and the image has 640 pixels x 640 lines, on the photosensitive surface 102 of the instant film 100. A method for forming the latent image will be explained in detail hereinafter.

The conveying unit 220 is provided closely to the container 260 which contains the film cartridge 120, and conveys and exhausts the instant film 100 which is used as the storage medium, to an arrow Z by using a pair of conveying rollers 221a, 221b and a pair of developing rollers 222a, 222b. The photosensitive surface 102 of the instant film 100 is exposed by the light unit 210 at the exposure surface P during conveyance of the instant film 100 so that it is possible to form the latent image on the photosensitive surface 102.

In this case, as mentioned above, the developing solution pack 101 is arranged at the end of the instant film 100 downstream of the conveying direction Z. Accordingly, the developing solution pack 101 is squeezed by the pair of developing rollers 222a and 222b so that the self-developing solution is gradually extruded from the developing solution pack 101 on the photosensitive surface 102 after exposure of the instant film 100.

Accordingly, on the instant film 100 exhausted from the storage medium conveying apparatus 200, development of the latent image is completed after a predetermined time, and the colored image can be obtained.

In this case, since the self-developing solution is reacted to the photosensitive surface 102 and developing processes are started, it is important that the self-developing solution is not contacted to non-exposed photosensitive surfaces 102. Accordingly, as mentioned below, the pair of conveying rollers 221a and 221b is structured in a way that a diameter of a central portion of each roller is smaller than the diameter of the end portion of each roller.

As a result, according to the present invention, the conveying rollers contact with the non-exposed areas provided at both sides of the instant film 100 in order to convey the instant film 100. Accordingly, the developing solution pack 102 is not squeezed by the pair of the conveying rollers 221a and 221b during conveyance of the instant film, and the developing solution is not extruded to the photosensitive surface 102 by the conveying rollers 221a and 221b.

Further, a rotary encoder 250 is provided to a central shaft of the conveying roller 221a, and exposure timing, for the light head 210, can be obtained by a control circuit 600 by using encoder pulses generated by the rotary encoder 250. The container 260 is structured so as to contain the film cartridge 120 held by a holder 261.

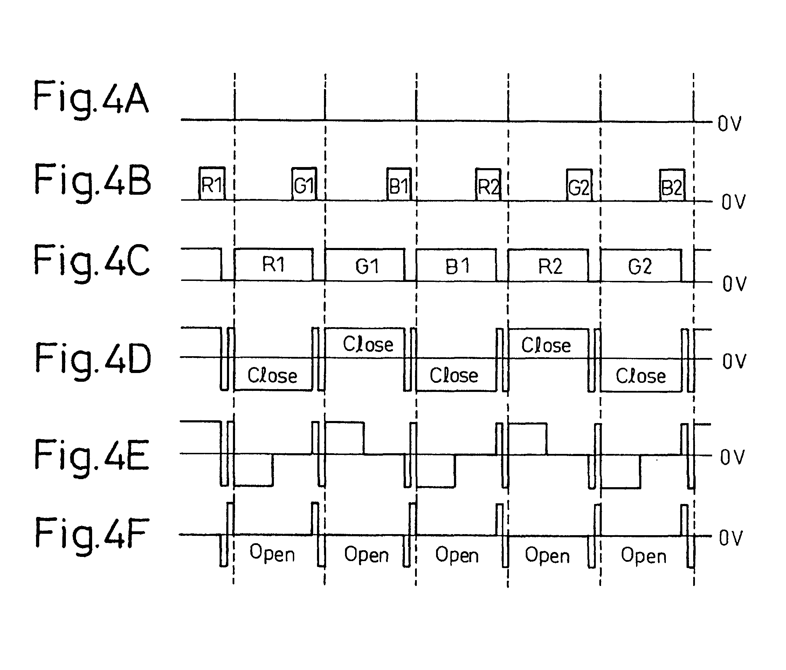

Figure 4A is an explanatory view of encoder pulses generated by the rotary encoder, Figure 4B is a timing chart of data transfer, Figure 4C is an explanatory view of LED emission pulses supplied to the LED unit 211, and Figures 4D to 4F are explanatory views of LCS pulses supplied to the liquid crystal shutter array 215.

The liquid crystal shutter array 215 includes only one line of liquid crystal shutter elements, that can be separately opened or closed, in the direction orthogonal to the conveying direction of the instant film 100 (see arrow Z of Fig. 3). Each shutter element transmits the light when a predetermined voltage is not applied to the element (0V), and cuts-off the light when the voltage is applied thereto. That is, the each shutter element is a "normally-white-type" liquid crystal.

Each of R, G, B elements of the LED of the LED unit 211 emits the light in the form of time-sharing. The line-like light formed by each of the R, G, B elements passes the shutter elements of the liquid crystal shutter array 215 in the form of one line (i.e. line-scanning mentioned above), and is focused, based on a predetermined pitch, at different locations on the photosensitive surface 102.

As shown in Fig. 4B, and corresponding to just before encoder pulse, the image data is transferred in order to drive each shutter element of the liquid crystal light shutter array 215. As shown in Fig. 4C, the LED light emission pulse is generated synchronously with each encoder pulse of Fig. 4A. The order of R, G, B is repeated so that each LED of the LED unit 211 emits in accordance with a predetermined time interval.

The rotary encoder 250 is provided coaxially to the conveying roller 211a so that it is possible to synchronize conveyance of the instant film 100. Accordingly, it is possible to prevent deterioration of quality of image due to dispersion of conveying speed since the LED light emission pulse and LCS pulse are emitted synchronously with the encoder pulse.

The LCS pulse shown in Fig. 4D is used for closing the entire liquid crystal light shutter array 215. The predetermined voltage is applied to all shutter elements in order to close all elements during light emission of each color of the LED. In this case, after developing, black appears on the photosensitive surface 102 of the instant film 100.

The LCS pulse shown in Fig. 4E is used for closing a half of the liquid crystal light shutter array 215. The predetermined voltage is applied to the shutter elements in order to close all elements during a half of light emission of each color of the LED. In this case, after developing, gray appears on the photosensitive surface 102 of the instant film 100.

The LCS pulse shown in Fig. 4F is used for opening the entire liquid crystal light shutter array 215. The voltage is not applied to all elements in order to open all shutter elements during light emission of each color of the LED. In this case, after developing, white appears on the photosensitive surface 102 of the instant film 100. As explained above, by controlling an interval of the voltage supply to the liquid crystal light shutter array 215, it is possible to express 64 gradations for each color according to this embodiment of the present invention.

After the end of exposure for each color, a pair of positive/negative pulses is applied to all shutter elements of the liquid crystal light shutter array 215 in order to process the image so as not to be influenced by the image history of each shutter element. Further, the polarity of the voltage applied to the liquid crystal light shutter array 215 is changed to another polarity every time in order to prevent deterioration of the liquid crystal. In this case, even if the polarity of the voltage applied to the liquid crystal light shutter array 215 is changed, it is assumed that there is no change of opening/closing operation of each shutter element in the present invention.

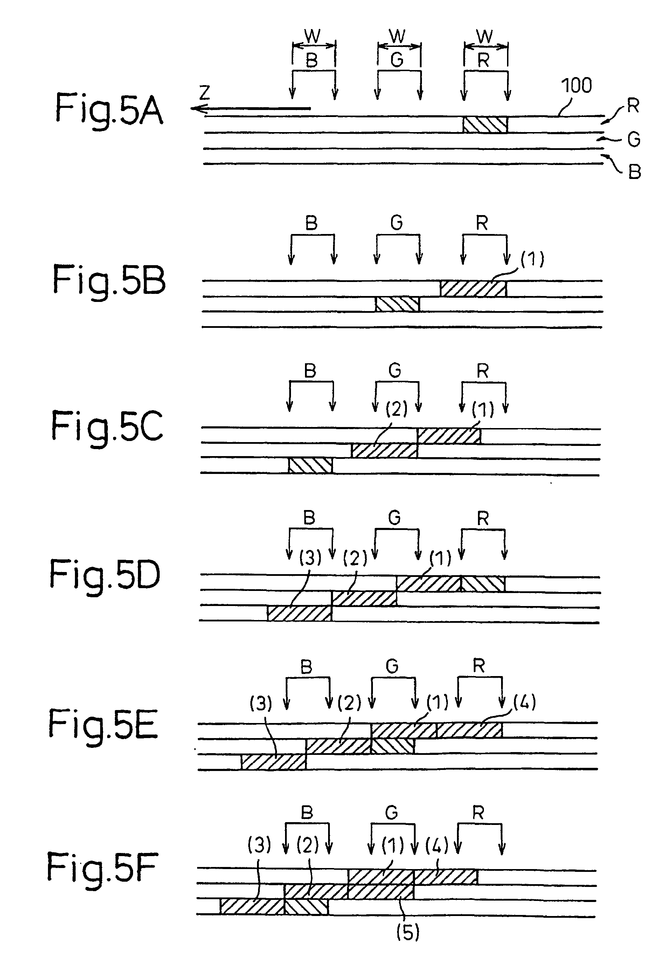

Figures 5A to 5F are explanatory views of forming processes of the latent image on the instant film 100. In this case, it is assumed that the instant film 100 is conveyed by the conveying unit 220 in the direction shown by the arrow Z at a predetermined conveying speed. Further, the instant film 100 includes an R layer for forming the latent image reacted by the R light, a G layer for forming the latent image reacted by the G light, and a B layer for forming the latent image reacted by the B light. As shown in Fig. 5A, each R, G, B light emitted from the light head unit 210 is focused at a predetermined pitch on the photosensitive surface 102 of the instant film 100 as an image having a width W.

Figure 5A shows a start timing of exposure using the R light. Figure 5B shows a start timing of exposure using the G light. In this case, the exposure at the term (1) on the R layer by the R light is completed due to the R light during a predetermined time, and due to movement of the instant film 100.

Figure 5C shows a start timing of exposure using the B light. In this case, the exposure at the term (2) on the G layer by the G light is completed due to the G light during a predetermined time, and due to movement of the instant film 100.

Figure 5D shows a start timing of exposure using the R light. In this case, the exposure at the term (3) on the B layer by the B light is completed due to the B light during a predetermined time, and due to movement of the instant film 100.

Similarly, the exposure at the term (4) by the R light is completed as shown in Fig. 5E, and the exposure at the term (5) by the G light is completed as shown in Fig. 5F. As a result, the latent image is formed on the instant film 100 by repeating the above processes.

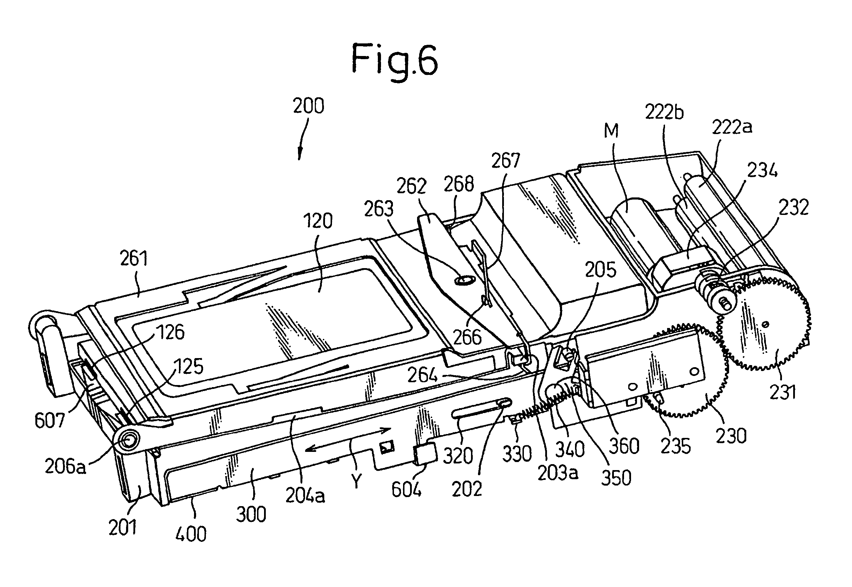

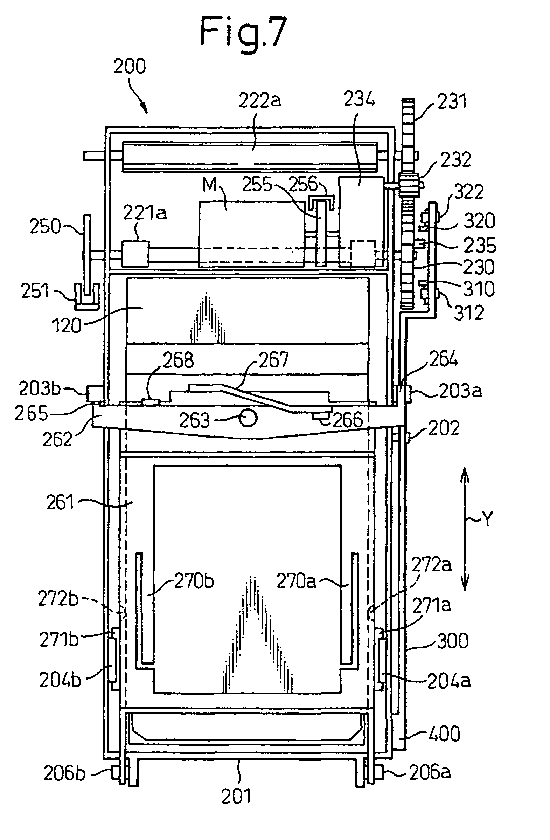

Figure 6 is a perspective view of the storage medium conveying apparatus according to the present invention, and Figure 7 is a plan view of the storage medium conveying apparatus according to the present invention.

In the drawing, M denotes a motor rotated forwardly or reversely by the control circuit 600 (see Fig. 3). A gear 232 is rotated forwardly or reversely by the motor M through a gear box 234. A gear 230 is provided coaxially with the conveying roller 221b, and a gear 231 is provided coaxially with the developing roller 222a. As shown in the drawing, the gear 232 is engaged with the gear 231, and the gear 231 is engaged with the gear 230. A pair of developing rollers 222a and 222b is driven in accordance with forward or reverse rotation of the motor M through the gears 232 and 231. Further, a pair of conveying rollers 221a and 221b is driven through the gear 230.

The rotary encoder 250 is provided coaxially to the conveying roller 221a. A sensor 251 is used for generating encoder pulses (see Fig. 4A) in accordance with rotation of the rotary encoder 250 and synchronous with rotation of the conveying roller 221a. In this case, if precise pulses can be generated synchronously with conveyance of the instant film 100, it is possible to utilize another structure instead of the sensor 251.

Electrodes 125 and 126 of the battery 127 are provided on the film cartridge 120. The electrodes 125 and 126 supply the power to the storage medium conveying apparatus 200 through a connecting point 607.

A holder 261 holds the film cartridge 120, and can be rotated around shafts 206a and 206b provided on a box member 201. An engaging member 262 is provided on the upper surface of the holder 261. The holder 261 is engaged with the box member 201 by engaging end portions 264 and 265 of the engaging member 262 with projected portions 203a and 203b provided on the box member 201.

The engaging member 262 can be rotated in an anti-clockwise direction around the shaft 263 in Fig. 7. When the engaging member 262 is rotated, engagement of the end portions 264 and 265 with the projected portions 203a and 203b are released so that the holder 261 can be rotated around the shafts 206a and 206b.

Further, the projected portions 204a and 204b are provided on the box member 201. These projected portions 204a and 204b are engaged with engaging members 271a and 271b provided on the holder 261 so that it is possible to limit the rotation of the holder 261 in a predetermined range. Further, the film cartridge 120 can be easily attached or removed when the holder 261 is rotated.

The projected portion 266 is fixed to the engaging member 262, and is engaged with the head portion of a plate spring 267 provided to the holder 261. Accordingly, the engaging member 262 receives an energized force from the plate spring 267 in the clockwise direction, in Fig. 7, through the projected portion 266. In this case, engaging member 262 cannot rotate at the clockwise direction past the position shown in Fig. 7 due to the stopper 268 provided on the holder 262.

When the engaging member 262 is rotated in an anti-clockwise direction, in Fig. 7, the energized force is applied to the engaging member 262 by the plate spring 267. Accordingly, when the engaging member 262 is rotated to anti-clockwise direction in order to release engagement between the head portions 264, 265 and the projected portions 203a, 203b of the engaging member 262, it is possible to automatically return the engaging member 262 to the position of Fig. 7 using the plate spring 267.

The taking-out member 300 takes out the instant film 100 from the film cartridge 120 using a hook portion 400 provided to one end of the taking-out member. A clutch mechanism is provided to the other end of the taking-out member 300, as mentioned hereinafter. The clutch mechanism is cooperated with the projected portion 235 provided on the surface of the gear 230, and is used for operating the taking-out member 300 with reciprocating motion to the direction shown by the arrow Y.

The taking-out member 300 has the opening portion 320, and is used for limiting straight reciprocating motion of the taking-out member 300 by cooperating with the projection portion 202 of the box member 201. Further, the taking-out member 300 has a rotational member 350 which can be freely rotated around a shaft 360. Further, the taking-out member 300 has a projected portion 330, and a spring member 340 is mounted between the projected portion 330 and the rotational portion 350. Further, rotational portion 350 can be rotated within the range that the projected portion 205 having a cylindrical shape limits the rotation of the rotational portion.

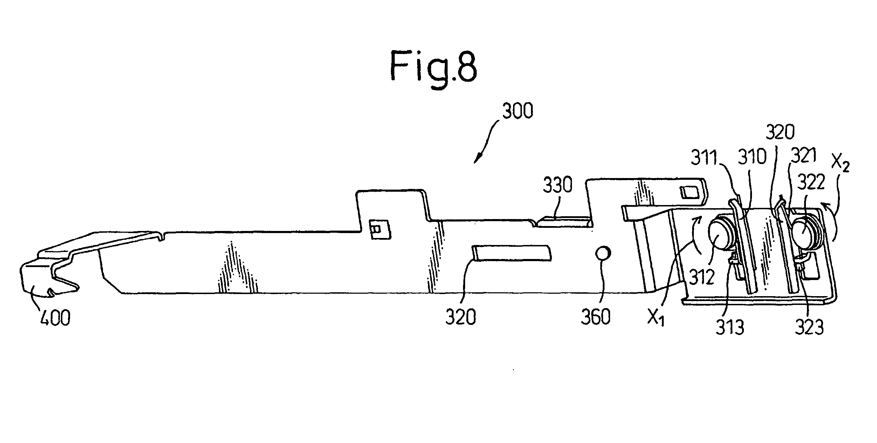

Figure 8 is a perspective view of the taking-out member 300 according to the present invention. As mentioned above, the hook portion 400 is provided at one end of the taking-out member 300 to take out the instant film 100, and the clutch mechanism is provided to the other end of the taking-out member 300.

A first cam 310 is mounted to the taking-out member 300 so as to be able to rotate around the shaft 312. A spring 311 is used as an elastic member and provided between the first cam 310 and the shaft 312, and applies the energized force to the first cam 310 in the direction shown by the arrow X₁. In this case, the stopper 313 limits the rotation of the first cam 310 so that the first cam 310 cannot be rotated past the position of Fig. 8 to the arrow X₁.

Similarly, a second cam 320 is mounted to the taking-out member 300 so as to be able to rotate around the shaft 322. A spring 321 is used as the elastic member and provided between the second cam 320 and the shaft 322 in order to apply the energized force to the second cam 320 to the direction shown by the arrow X₂. In this case, a stopper 323 is used for limiting the rotation of the second cam 320 so that the second cam 320 cannot be rotated past the position of Fig. 8 to the arrow X₂.

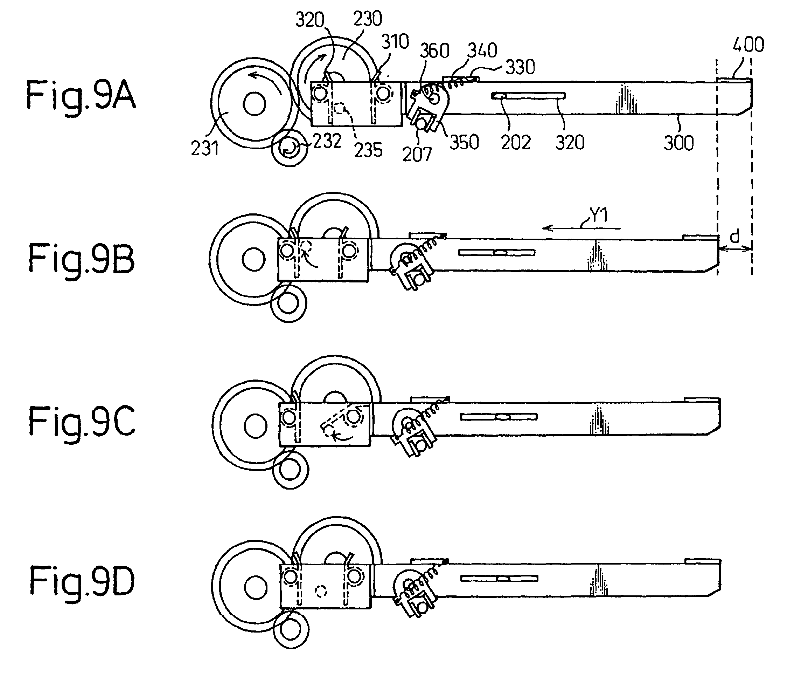

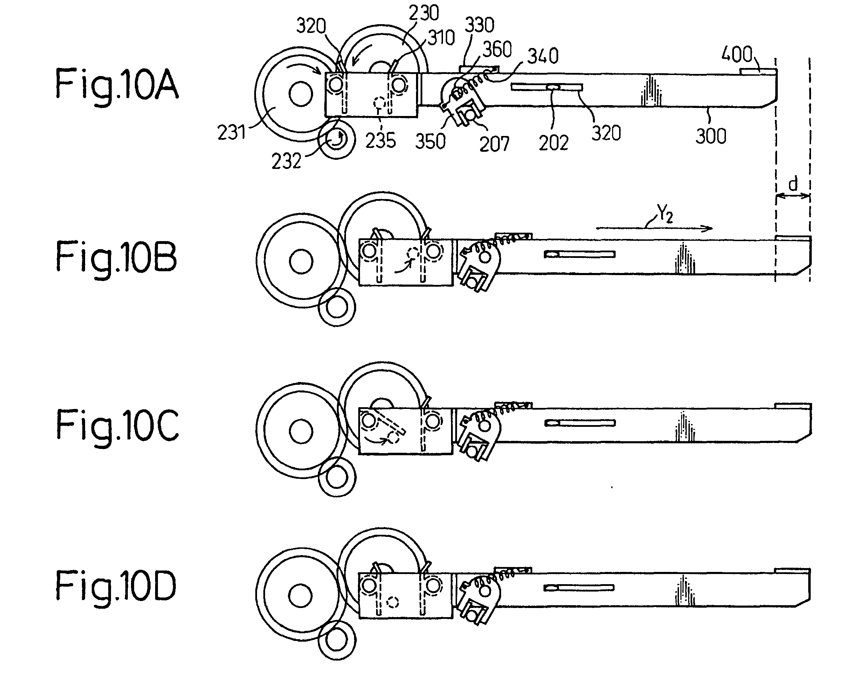

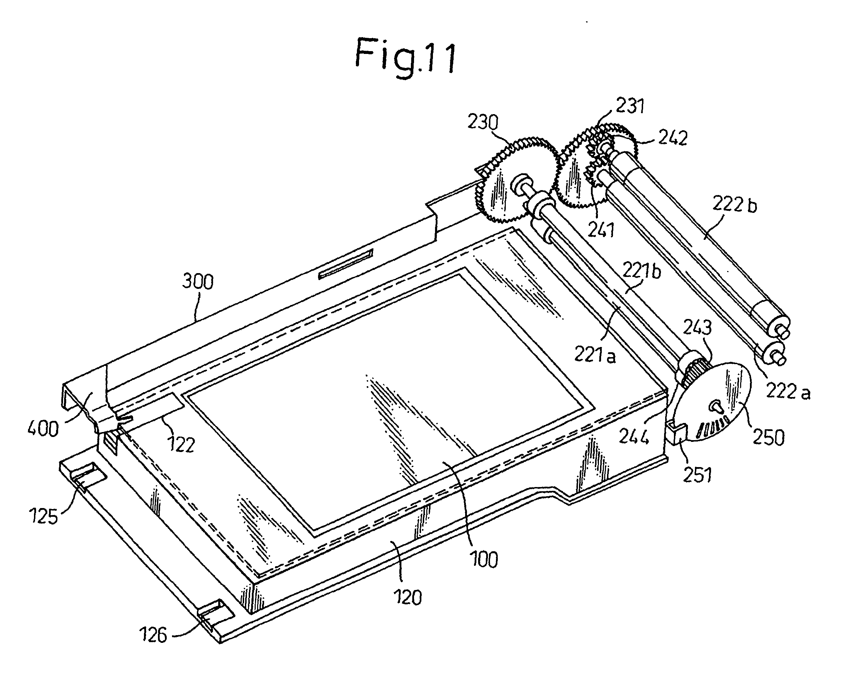

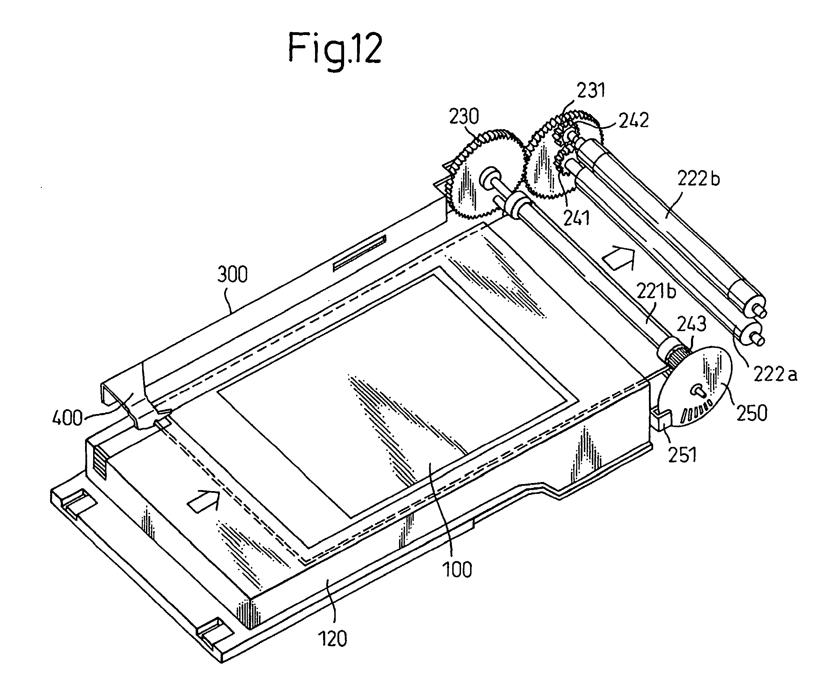

Figures 9A to 9D are views for explaining one example of operation of the taking-out member 300 according to the present invention, and Figures 10A to 10D are views for explaining another example of the operation of the taking-out member 300 according to the present invention. Further, Figure 11 is a view for explaining one example of the relationship between the taking-out member 300 and the film cartridge 120, and Figure 12 is a view for explaining another example of the relationship between the taking-out member 300 and the film cartridge 120.

Further, Figure 9A shows an initial situation of the operation, and Figure 11 shows the relationship between a pick-up member 400 and the film cartridge 120 at the initial situation shown in Fig. 9A. In Fig. 9A, the pick-up member 400 contacts the rear end of the instant film 100 through the small opening portion 122 of the film cartridge 120. Further, the pick-up member 400 contacts with the rear end of the instant film 100 through an opening portion (not shown) provided to the box member 201.

In this case, as shown in Fig. 11, the gear 241 is provided coaxially to the gear 231, and is engaged with the gear 242 provided coaxially to the developing roller 222b. Further, the gear 243 is provided coaxially with the conveying roller 221b, and is engaged with the gear 244 provided coaxially with the conveying roller 221a. Accordingly, when the gear 231 is rotated by the motor M, the conveying roller 222b is driven through the gears 241 and 242. Similarly, the conveying roller 221a is driven through the gears 230, 243 and 244.

When the motor M (see Fig. 7) starts to rotate forwardly in the situation of Fig. 9A, the gears 232, 231 and 232 are rotated to the direction shown by the arrow so that the projected portion 235 provided on the gear 230 starts to rotate. Since the second cam 320 provided on the taking-out member 300 cannot be rotated due to the stopper 323, the taking-out member 300 moves to the direction shown by the arrow Y₁ (i.e. direction from a side of the container 260 to a side of conveying unit 220 (see Fig. 3)) in accordance with rotation of the projected portion 235.

Figure 9B shows a situation in which the taking-out member 300 is moved to the extreme side of the conveying unit 220. When the taking-out member 300 moves to the position shown in Fig. 9B, engagement between the projected portion 235 and the second cam 320 is released, and the drive force to the motor M is cut off so that the taking-out member 300 cannot be moved past a predetermined distance "d".

Figure 12 shows a relationship between the pick-up member 400 and the film cartridge 120 at the situation shown in Fig. 9B. When the taking-out member 300 moves in the direction shown by the arrow Y₁, the hook portion 400 pushes the rear end of the instant film 100 so that it is possible to transfer the instant film 100 to the pair of the conveying rollers 221a and 221b. As mentioned above, each of the pair of conveying rollers 221a and 221b is structured in such a way that the diameter of the central portion of each roller is smaller than the diameter of the end portion thereof. As a result, the developing solution pack, which is positioned to the head end portion of the instant film 100, cannot be squeezed by the pair of the conveying rollers 221a and 221b.

After the above situation shown in Fig. 9B, since it is necessary to convey and develop the instant film 100, the motor M continues to rotate forwardly during a predetermined time. Accordingly, the projected portion 235 provided to the gear 230 also continues to rotate. In this case, as shown in Fig. 9C, the projected portion 235 is engaged with the first cam 310. In this case, however, since the projected portion 235 rotates to rotatable direction of the first cam 310, the first cam 310 rotates only around the shaft 312 and the taking-out member 300 is not moved.

As shown in Fig. 9D, when engagement between the projected portion 235 and the first cam 310 is released, the first cam 310 is automatically returned to the position engaged by the stopper 313, due to the energized force by the spring member 311. Accordingly, the taking-out member 300 cannot be moved past the predetermined distance "d" to the side of the conveying unit 220.

In this case, in the situation shown in Fig. 9A, the energized force is applied to the taking-out member 300 at the direction of the container 260 so as to keep the taking-out member 300 in the situation shown in Fig. 9A. Further, in the situation shown in Fig. 9B, since the spring member 340 is changed to the position lower than the shaft 360, the energized force acts on the side of the conveying unit 220 so that the taking-out member 300 is held in the situation shown in Fig. 9B. As explained above, even if the taking-out member 300 executes reciprocating motion based on action of the rotational member 350 and the spring member 340, the energized force is acted to the taking-out member 300 so that the taking-out member 300 can be maintained at each position.

Figure 10A shows a situation in which the conveying rollers 221a, 221b and the developing rollers 222a, 222b completed conveyance of the instant film 100. In this situation, the pick-up member 400 remains in just the same position as shown in Fig. 12.

When the motor M rotates reversely from the situation shown in Fig. 10A, the gears 232, 231 and 230 are rotated in the direction shown by the arrow so that the projected portion 235, which is provided on the gear 230 and engaged with the first cam 310, is also rotated. In this case, since the first cam 310 provided on the taking-out member 300 cannot be rotated due to the stopper 313, the taking-out member 300 moves to the direction shown by the arrow Y₂ (direction from the side of the conveying unit 220 to the side of the container 260) in accordance with rotation of the projected portion 235 as shown in Fig. 10B.

Figure 10B shows the situation in which the taking-out member 300 is moved to the extreme side of the container. At that time, the pick-up member 400 moves back to the position shown in Fig. 11 by sliding on an other instant film arranged under the transferred instant film 100.

After the situation shown in Fig. 10B, the motor M continues to rotate reversely for a predetermined time, and the projected portion 235 provided on the gear 230 also continues to rotate. In this case, as shown in Fig. 10C, although the projected portion 235 is engaged with the second cam 320, because the projected portion 235 rotates in the direction in which the second cam 320 can rotate, and because the second cam 320 rotates only around the shaft 322, the taking-out member 300 is not moved.

Accordingly, as shown in Fig. 10D, when the engagement is released between the projected portion 235 and the second cam 320, the second cam 320 automatically returns to the position engaged by the stopper 323. That is, the taking-out member 300 is not moved to the side of the container 260 over the predetermined distance "d".

As explained above, based on driving force of the single motor M, the conveying unit 220 is driven, the taking-out member 300 executes reciprocating motion, and the instant film 100 is taken out from the container 260 so that it is possible to convey and develop the instant film 100.

In the above embodiment, although the instant film is used as the storage medium, the invention is not limited to the instant film. For example, it is possible to utilize a normal paper, a conventional photosensitive paper and the like, as the storage medium in the present invention. In this case, it is preferable to change the light head and exposure processes in accordance with the storage medium.

As to the effect of the present invention, the following matters are provided.

It is possible to execute taking-out of the storage medium and conveying the medium after taking it out, in accordance with rotation of the single motor.

Further, the taking-out member for taking the storage medium out from the film cartridge receives the driving force from the motor M through the clutch mechanism so that it is possible to easily take out the storage medium from the conveying apparatus.

Still further, since the taking-out member receives the energized force at both start and end positions for taking out the storage medium so as to hold the start and end positions thereof, it is possible to realize stable operation when taking out the storage medium.

## Claims

1. A storage medium conveying apparatus (200) comprising
a container (120) for containing sheets of the storage medium (100),
a conveying unit (220) provided adjacent to the container for conveying the storage medium sheet by sheet,
a taking-out member (300) for taking out the storage medium sheet by sheet and executing reciprocating motion between a side of the conveying unit and a side of the container in order to transfer the storage medium from the container to the conveying unit,
a single motor (M) for driving both the conveying unit and the taking-out member where the motor moves the taking-out member by a predetermined distance from the side of the container to the side of the conveying unit in order to transfer one sheet of the storage medium and
a clutch mechanism (310, 320) arranged to cut off the driving force applied from the single motor to the taking-out member once said taking-out member has been moved said predetermined distance,
**characterized in that**
the single motor (M) and the clutch mechanism (310, 320) are designed to also move the taking-out member by said predetermined distance from the side of the conveying unit to the side of the container in order to take out the next sheet of the storage medium.

2. A storage medium conveying apparatus, as claimed in claim 1, wherein a drive force applied from the single motor to the taking-out member is cut off by the clutch mechanism after the taking-out member moves by the predetermined distance from the side of the container to the side of the conveying unit, and a drive force applied from the single motor to the taking-out member is cut off by the clutch mechanism after the taking-out member moves by the predetermined distance from the side of the conveying unit to the side of the container.

3. A storage medium conveying apparatus, as claimed in claim 1 or 2, wherein the taking-out member moves from the side of the container to the side of the conveying unit when the single motor rotates forwardly and the taking-out member moves from the side of the conveying unit to the side of the container when the single motor rotates reversely.

4. A storage medium conveying apparatus, as claimed in any of claims 1 to 3, wherein, when the taking-out member is positioned at the side of the container, the taking-out member is energized by an elastic member (340) to the side of the container, and when the taking-out member is positioned at the side of the conveying unit, the taking-out member is energized by the elastic member to the side of the conveying unit.

5. A storage medium conveying apparatus, as claimed in any of claims 1 to 4, wherein the storage medium includes an instant film containing a self-developing solution (101) therein.

6. A storage medium conveying apparatus, as claimed in claim 5, wherein the conveying unit includes developing rollers (222a, 222b) for squeezing the self-developing solution.

7. A storage medium conveying apparatus, as claimed in claim 6, wherein the conveying unit includes conveying rollers (221 a, 221 b) for conveying the storage medium from the container to the developing rollers.

8. A storage medium conveying apparatus, as claimed in claim 7, wherein the conveying rollers convey the instant film by contacting non-exposed areas located at both sides of the instant film.

9. A storage medium conveying apparatus as claimed in claim 7 or 8, wherein the diameter at a center portion of each of the conveying rollers is smaller than the diameter at an end portion thereof.

10. A storage medium conveying apparatus, as claimed in any of claims 5 to 9, wherein the instant film is contained in a film cartridge which is contained in the container.

11. A storage medium conveying apparatus, as claimed in any of claims 1 to 10, further comprising a light source for exposing the instant film based on image data while the instant film is transferred by the conveying unit.

12. A storage medium conveying apparatus as claimed in claim 11, wherein the light source includes a liquid crystal light shutter (215).

13. A storage medium conveying apparatus, as claimed in claim 12, wherein the liquid crystal light shutter cuts off the light when a voltage is applied thereto.

14. A storage medium conveying apparatus, as claimed in any of claims 11 to 13, wherein the light source includes a light unit (211) consisting of LED generating R, G and B.

15. A storage medium conveying apparatus, as claimed in any of claims 1 to 14, wherein the light source exposes the instant film by line-scanning during the conveying of the instant film.

## Patentansprüche

1. Transportvorrichtung (200) für ein Speichermedium mit
- einem Behälter (120) zum Aufnehmen von Blättern des Speichermediums (100),
- einer Transporteinheit (220), die benachbart zu dem Behälter vorgesehen ist, um das Speichermedium Blatt für Blatt zu transportieren,
- einem Entnahmeelement (300) zum Entnehmen des Speichermediums Blatt für Blatt und Ausführen einer Hin- und Herbewegung zwischen einer Seite der Transporteinheit und einer Seite des Behälters, um das Speichermedium von dem Behälter zu der Transporteinheit zu transferieren,
- einem einzelnen Motor (M) zum Antreiben sowohl der Transporteinheit als auch des Entnahmeelements, wobei der Motor das Entnahmeelement um eine vorgegebene Entfernung von der Seite des Behälters zu der Seite der Transporteinheit bewegt, um ein Blatt des Speichermediums zu transferieren, und
- einem Kupplungsmechanismus (310, 320), der so angeordnet ist, dass er die Antriebskraft abtrennt, die von dem einzelnen Motor an das Entnahmeelement angelegt wird, wenn das Entnahmeelement um die vorgegebene Entfernung bewegt wurde,
**dadurch gekennzeichnet, dass**
- der einzelne Motor (M) und der Kupplungsmechanismus (310, 320) so ausgelegt sind, dass sie außerdem das Entnahmeelement um die vorgegebene Entfernung von der Seite der Transporteinheit zu der Seite des Behälters bewegen, um das nächste Blatt des Speichermediums zu entnehmen.

2. Transportvorrichtung für ein Speichermedium nach Anspruch 1, **dadurch gekennzeichnet, dass** eine Antriebskraft, die von dem einzelnen Motor an das Entnahmeelement angelegt wird, durch den Kupplungsmechanismus abgetrennt wird, nachdem sich das Entnahmeelement um die vorgegebene Entfernung von der Seite des Behälters zu der Seite der Transporteinheit bewegt hat, und eine Antriebskraft, die von dem einzelnen Motor an das Entnahmeelement angelegt wird, durch den Kupplungsmechanismus abgetrennt wird, nachdem sich das Entnahmeelement um die vorgegebene Entfernung von der Seite der Transporteinheit zu der Seite des Behälters bewegt hat.

3. Transportvorrichtung für ein Speichermedium nach Anspruch 1 oder 2, **dadurch gekennzeichnet, dass** sich das Entnahmeelement von der Seite des Behälters zu der Seite der Transporteinheit bewegt, wenn sich der einzelne Motor in Vorwärtsrichtung dreht, und sich das Entnahmeelement von der Seite der Transporteinheit zu der Seite des Behälters bewegt, wenn sich der einzelne Motor in umgekehrter Richtung dreht.

4. Transportvorrichtung für ein Speichermedium nach einem der Ansprüche 1 bis 3, **dadurch gekennzeichnet, dass** das Entnahmeelement, wenn das Entnahmeelement an der Seite des Behälters positioniert ist, durch ein elastisches Element (340) zu der Seite des Behälters hin aktiviert wird, und das Entnahmeelement, wenn das Entnahmeelement an der Seite der Transportvorrichtung positioniert ist, durch das elastische Element zu der Seite der Transporteinheit hin aktiviert wird.

5. Transportvorrichtung für ein Speichermedium nach einem der Ansprüche 1 bis 4, **dadurch gekennzeichnet, dass** das Speichermedium einen Sofortbildfilm beinhaltet, der eine Selbstentwicklungslösung (101) darin enthält.

6. Transportvorrichtung für ein Speichermedium nach Anspruch 5, **dadurch gekennzeichnet, dass** die Transporteinheit Entwicklungsrollen (222a, 222b) zum Ausdrücken der Selbstentwicklungslösung beinhaltet.

7. Transportvorrichtung für ein Speichermedium nach Anspruch 6, **dadurch gekennzeichnet, dass** die Transporteinheit Transportrollen (221, 221b) zum Transportieren des Speichermediums von dem Behälter zu den Entwicklungsrollen beinhaltet.

8. Transportvorrichtung für ein Speichermedium nach Anspruch 7, **dadurch gekennzeichnet, dass** die Transportrollen den Sofortbildfilm durch Kontaktieren von nicht belichteten Gebieten transportiert, die sich an beiden Seiten des Sofortbildfilms befinden.

9. Transportvorrichtung für ein Speichermedium nach Anspruch 7 oder 8, **dadurch gekennzeichnet, dass** der Durchmesser eines Mittenbereichs von jeder der Transportrollen kleiner als der Durchmesser eines Endbereichs derselben ist.

10. Transportvorrichtung für ein Speichermedium nach einem der Ansprüche 5 bis 9, **dadurch gekennzeichnet, dass** der Sofortbildfilm in einer Filmkassette enthalten ist, die in dem Behälter enthalten ist.

11. Transportvorrichtung für ein Speichermedium nach einem der Ansprüche 1 bis 10, weiter **gekennzeichnet durch** eine Lichtquelle zum Belichten des Sofortbildfilms basierend auf Bilddaten, während der Sofortbildfilm **durch** die Transporteinheit transferiert wird.

12. Transportvorrichtung für ein Speichermedium nach Anspruch 11, **dadurch gekennzeichnet, dass** die Lichtquelle eine Flüssigkristall-Lichtblende (215) beinhaltet.

13. Transportvorrichtung für ein Speichermedium nach Anspruch 12, **dadurch gekennzeichnet, dass** die Flüssigkristall-Lichtblende das Licht ausblendet, wenn eine Spannung daran angelegt wird.

14. Transportvorrichtung für ein Speichermedium nach einem der Ansprüche 11 bis 13, **dadurch gekennzeichnet, dass** die Lichtquelle eine Lichteinheit (211) beinhaltet, die aus einer LED besteht, die R, G und B erzeugt.

15. Transportvorrichtung für ein Speichermedium nach einem der Ansprüche 11 bis 14, **dadurch gekennzeichnet, dass** die Lichtquelle den Sofortbildfilm mittels Linienabtastung während des Transportierens des Sofortbildfilms belichtet.

## Revendications

1. Un appareil de transport de moyen de stockage (200) comprenant :
- un récipient (120) destiné à contenir des feuilles du moyen de stockage (100),
- une unité de transport (220) disposée de manière adjacente par rapport au récipient destinée à transporter le moyen de stockage feuille par feuille,
- un élément d'extraction (300) destiné à extraire le moyen de stockage feuille par feuille et à exécuter un mouvement de va-et-vient entre un côté de l'unité de transport et un côté du récipient afin de transférer le moyen de stockage du récipient vers l'unité de transport,
- un moteur unique (M) destiné à entraîner à la fois l'unité de transport et l'élément d'extraction où le moteur déplace l'élément d'extraction d'une distance prédéterminée du côté du récipient vers le côté de l'unité de transport afin de transférer une feuille du moyen de stockage, et
- un mécanisme d'embrayage (310, 320) disposé afin d'isoler l'énergie motrice appliquée à partir du moteur unique sur l'élément d'extraction une fois que ledit élément d'extraction a été déplacé de ladite distance prédéterminée,
**caractérisé en ce que**
- le moteur unique (M) et le mécanisme d'embrayage (310, 320) sont conçus également afin de déplacer l'élément d'extraction de ladite distance prédéterminée du côté de l'unité de transport vers le côté du récipient afin d'extraire la feuille suivante du moyen de stockage.

2. Un appareil de transport de moyen de stockage selon la revendication 1, dans lequel une énergie motrice appliquée à partir du moteur unique sur l'élément d'extraction est isolée par le mécanisme d'embrayage après que l'élément d'extraction ait été déplacé de la distance prédéterminée du côté du récipient vers le côté de l'unité de transport, et une énergie motrice appliquée à partir du moteur unique sur l'élément d'extraction est isolée par le mécanisme d'embrayage après que l'élément d'extraction ait été déplacé de la distance prédéterminée du côté de l'unité de transport vers le côté du récipient.

3. Un appareil de transport de moyen de stockage selon la revendication 1 ou 2, dans lequel l'élément d'extraction est déplacé du côté du récipient vers le côté de l'unité de transport lorsque le moteur unique tourne en marche avant et l'élément d'extraction est déplacé du côté de l'unité de transport vers le côté du récipient lorsque le moteur unique tourne en marche arrière.

4. Un appareil de transport de moyen de stockage selon l'une quelconque des revendications 1 à 3, dans lequel, lorsque l'élément d'extraction est positionné au niveau du côté du récipient, l'élément d'extraction est alimenté au moyen d'un élément élastique (340) sur le côté du récipient, et lorsque l'élément d'extraction est positionné au niveau du côté de l'unité de transport, l'élément d'extraction est alimenté au moyen de l'élément élastique sur le côté de l'unité de transport.

5. Un appareil de transport de moyen de stockage selon l'une quelconque des revendications 1 à 4, dans lequel le moyen de stockage comprend un film instantané contenant un auto-révélateur (101) dans celui-ci.

6. Un appareil de transport de moyen de stockage selon la revendication 5, dans lequel l'unité de transport comprend des rouleaux de développement (222a, 222b) destinés à presser l'auto-révélateur.

7. Un appareil de transport de moyen de stockage selon la revendication 6, dans lequel l'unité de transport comprend des rouleaux de transport (221a, 221b) destinés à transporter le moyen de stockage du récipient vers les rouleaux de développement.

8. Un appareil de transport de moyen de stockage selon la revendication 7, dans lequel les rouleaux de transport transportent le film instantané en mettant en contact des zones non exposées situées au niveau des deux côtés du film instantané.

9. Un appareil de transport de moyen de stockage selon la revendication 7 ou 8, dans lequel le diamètre au niveau d'une partie centrale de chacun des rouleaux de transport est inférieur au diamètre au niveau d'une partie d'extrémité de ceux-ci.

10. Un appareil de transport de moyen de stockage selon l'une quelconque des revendications 5 à 9, dans lequel le film instantané est contenu dans une cartouche de film qui est contenue dans le récipient.

11. Un appareil de transport de moyen de stockage selon l'une quelconque des revendications 1 à 10, comprenant en outre une source lumineuse destinée à exposer le film instantané en se basant sur des données d'image alors que le film instantané est transféré par l'unité de transport.

12. Un appareil de transport de moyen de stockage selon la revendication 11, dans lequel la source lumineuse comprend un obturateur de lumière à cristal liquide (215).

13. Un appareil de transport de moyen de stockage selon la revendication 12, dans lequel l'obturateur de lumière à cristal liquide coupe la lumière lorsqu'une tension est appliquée sur celui-ci.

14. Un appareil de transport de moyen de stockage selon l'une quelconque des revendications 11 à 13, dans lequel la source lumineuse comprend une unité lumineuse (211) constituée d'une diode électroluminescente générant R, V et B.

15. Un appareil de transport de moyen de stockage selon l'une quelconque des revendications 11 à 14, dans lequel la source lumineuse expose le film instantané en effectuant un balayage linéaire au cours du transport du film instantané.
